# EUROPÄISCHE PATENTSCHRIFT

(11) **EP 3 129 715 B1**
(45) Veröffentlichungstag und Bekanntmachung des Hinweises auf die Patenterteilung: **10.05.2023**
(21) Anmeldenummer: 15712155.9
(22) Anmeldetag: 26.03.2015
(51) Int. Cl.: F24C 15/20

(54) **BELEUCHTUNGSMODUL FÜR HAUSHALTSGERÄT UND HAUSHALTSGERÄT**
LIGHTING MODULE FOR A HOUSEHOLD APPLIANCE, AND HOUSEHOLD APPLIANCE
MODULE D'ÉCLAIRAGE D'UN APPAREIL MÉNAGER ET APPAREIL MÉNAGER

(30) Priorität: 10.04.2014 EP 14290103
(43) Veröffentlichungstag der Anmeldung: 15.02.2017
(73) Patentinhaber: BSH Hausgeräte GmbH, 81739 München (DE)
(72) Erfinder: FEISTHAMMEL, Egon, 76437 Rastatt (DE); GROMER, Andreas, 67640 Fergersheim (FR); KLEINBUB, Guido, 76477 Elchesheim-Illingen (DE); LEBRUN, Yves, 67114 Eschau (FR)
(86) Internationale Anmeldenummer: PCT/EP2015/056586
(87) Internationale Veröffentlichungsnummer: WO 2015/155020

(56) Entgegenhaltungen:
- WO-A1-2011/139280
- DE-A1-102004 055 943
- DE-A1-102010 006 697
- DE-A1-102011 086 968
- DE-U1- 29 919 452
- US-B2- 8 997 732

## Beschreibung

Die Erfindung betrifft ein Beleuchtungsmodul für ein Haushaltsgerät sowie ein Haushaltsgerät mit Beleuchtungsmodul.

Bei Haushaltsgeräten, insbesondere bei Küchengeräten ist es bekannt als Zusatzfunktionalität die Beleuchtung des Küchengerätes, insbesondere des Innenraums des Küchengerätes oder der Umgebung des Küchengerätes vorzusehen. Hierbei werden Beleuchtungsmodule verwendet, über die beispielsweise das Innere des Gerätes zeitweise ausgeleuchtet wird oder über die die Umgebung des Gerätes zeitweise beleuchtet wird. Zudem ist es bekannt Haushaltsgeräte, insbesondere Küchengeräte mit weiteren Zusatzfunktionalitäten außer der Beleuchtung zu versehen, die entweder Funktionen ermöglichen, die über die Grundfunktion des Gerätes hinausgehen oder die die Benutzung der Grundfunktionen vereinfachen. So kann beispielsweise bei einer Dunstabzugshaube die Steuerung des Lüftermotors durch eine solche Zusatzfunktionalität auf der Basis von Umgebungsdaten, die automatisch erfasst werden, erfolgen.

Die elektrischen oder elektronischen Komponenten, die zum Ausführen der Zusatzfunktionalitäten erforderlich sind, werden in der Regel in dem Gehäuse des Haushaltsgerätes separat zueinander eingebaut.

Dies weisteine Reihe von Nachteilen auf. Zum einen ist der Aufbau des Haushaltsgerätes dadurch komplex und zudem ist es in der Regel erforderlich separate Öffnungen in dem Gehäuse des Haushaltgerätes vorzusehen, durch die die Komponenten für die einzelnen Zusatzfunktionalitäten mit der Umgebung oder dem Innenraum des Haushaltsgerätes in Kontakt gebracht werden können.

Die WO 2011/139280 offenbart eine Dunstabzugshaube mit einem Beleuchtungsmodul. In einer Ausführungsform der D1 wird offenbart, dass das Beleuchtungsmodul mindestens eine Lichtquelle und mindestens einen Sensor aufweist, wobei der Sensor mit einer Steuereinheit kommuniziert, um den Strom durch das LED-Modul und insbesondere durch die LEDs zu kontrollieren.

In der DE 299 19 452 U1 wird eine Dunstabzugshaube mit Schaltsensorik offenbart. Die Dunstabzugshaube mit Gebläse und Beleuchtung für das darunter liegende Kochfeld umfasst eine berührungslose Schaltsensorik ohne zusätzlich zu handhabende Fernsteuerung für das Gebläse und/oder die Beleuchtung für das Gebläse und/oder die Beleuchtung.

Die DE 10 2011 086 968 A1 beschreibt ein Beleuchtungsmodul für ein Haushaltsgerät, umfassend zumindest eine optische Einheit mit zumindest einer Lichtquelle, zumindest ein Kühlelement zum Kühlen zumindest eines Teils der optischen Einheit und zumindest einen Rahmen zur Halterung zumindest eines Teils der optischen Einheit. Das Beleuchtungsmodul ist dadurch gekennzeichnet, dass das Beleuchtungsmodul zumindest ein Gehäuse zur Aufnahme zumindest eines Teils der optischen Einheit aufweist und das Gehäuse zumindest ein Eingriffsmittel zum Eingriff mit zumindest einem Teil des Kühlelementes und zumindest ein Verbindungsmittel zur Verbindung mit zumindest einem Teil des Rahmens aufweist.

Die US 8,997,732 B2 offenbart ein Verfahren und eine Vorrichtung für den thermischen Schutz von LED-Lichtmodulen in einem Dunstabzugsgerät. Wenn die Temperatur des LED-Lichtmoduls eine vorbestimmte Temperatur erreicht, werden eine oder mehrere Schutzmaßnahmen vorgenommen, um ein Überhitzen des LED-Lichtmoduls zu verhindern. Solche Schutzmaßnahmen können beispielsweise das reduzieren und/oder beenden der Stromzufuhr zu dem LED-Lichtmodul, das Öffnen eines Dämpfers, um Luft zum Kühlen des LED-Lichtmoduls bereit zu stellen und/oder das Aktivieren eines Lüfters, um forcierte Konvektionskühlung zu schaffen, einschließen.

Die DE 10 2010 006 697 A1 beschreibt eine Dunstabzugshaube, insbesondere für den Privathaushalt, mit einer vom Anwender zu bedienenden Steuereinheit für eine Absaugeinrichtung und ggf. für eine Beleuchtungseinrichtung, dadurch gekennzeichnet, dass die Steuereinheit mittels Sensoren berührungslos bedienbar ist und dass die Steuereinheit einen Sensor für den Nahbereich aufweist, mit dem die Absaugeinrichtung ein- und/oder ausschaltbar ist.

Der Erfindung liegt daher die Aufgabe zugrunde ein Lösung zu schaffen, durch die ein Haushaltsgerät einen einfachen Aufbau aufweisen kann und einfach hergestellt werden kann und bei der das Haushaltsgerät dennoch Zusatzfunktionalitäten zuverlässig ausführen kann.

Der Erfindung liegt die Erkenntnis zugrunde, dass diese Aufgabe gelöst werden kann, indem zumindest einige der Komponenten, die für Zusatzfunktionalitäten eines Haushaltsgerätes erforderlich sind, in einer gemeinsamen Einheit vorgesehen werden, insbesondere indem in einem Beleuchtungsmodul zumindest einige Komponenten, die für weitere Zusatzfunktionalitäten notwendig sind, integriert werden.

Gemäß einem ersten Aspekt betrifft die Erfindung daher ein Beleuchtungsmodul für ein Hauhaltsgerät, wobei das Beleuchtungsmodul mindestens eine Lichtquelle, mindestens eine Sensoreinheit und mindestens eine Anschlusseinheit aufweist. Das Beleuchtungsmodul ist dadurch gekennzeichnet, dass die mindestens eine Anschlusseinheit eine gemeinsame Anschlusseinheit darstellt, die mit der mindestens einen Lichtquelle und der mindestens einen Sensoreinheit verbunden ist und zur Verbindung des Beleuchtungsmoduls mit zumindest einer Steuereinheit des Haushaltsgerätes dient, dass das Beleuchtungsmodul einen Träger für die mindestens eine Lichtquelle aufweist, dass der Träger eine Platine darstellt und dass die mindestens eine Sensoreinheit auf dem Träger auf der Seite des Trägers, an der die mindestens eine Lichtquelle vorgesehen ist, vorgesehen ist.

Als Haushaltsgerät wird im Sinne der Erfindung insbesondere ein elektrisches oder gasbetriebenes Haushaltsgerät bezeichnet. Vorzugsweise stellt das Haushaltsgerät ein Küchengerät und weiter bevorzugt ein luftförderndes Küchengerät dar. Beispiele für Haushaltsgeräte gemäß der vorliegenden Erfindung sind daher Dunstabzugshauben, Backöfen oder Kühlschränke. Das Haushaltsgerät wird im Folgenden auch als Gerät bezeichnet. Als Zusatzfunktionalitäten werden im Sinne der Erfindung Funktionalitäten bezeichnet, die über die Grundfunktion des Haushaltsgerätes hinaus gehen. Die Grundfunktion einer Dunstabzugshaube ist hierbei insbesondere das Einsaugen und Reinigen von Dünsten und Wrasen von einer Kochstelle. Die Grundfunktion eines Backofens ist das Garen von Gargut in dem Innenraum des Backofens. Die Grundfunktion eines Kühlschrankes ist das Kühlhalten und gegebenenfalls Abkühlen von Kühlgut. Die Zusatzfunktionalitäten umfassen Funktionalitäten, durch die beispielsweise die Grundfunktion des Gerätes automatisch angesteuert oder eine Einstellung der Grundfunktion automatisch vorgenommen wird. Zudem können Zusatzfunktionalitäten aber auch Funktionen sein, die von der Grundfunktion unabhängig sind. Beispielsweise kann eine Zusatzfunktionalität eine Bildüberwachung von Gargut, Kühlgut oder einer Kochstelle sein. Die Beleuchtung des Innenraums des Haushaltsgerätes oder zumindest eines Teils der Umgebung des Haushaltsgerätes stellt ebenfalls eine Zusatzfunktionalität dar.

Als Beleuchtungsmodul wird eine Einheit bezeichnet, die zumindest eine Lichtquelle aufweist. Das Beleuchtungsmodul weist zudem einen Träger für die mindestens eine Lichtquelle auf. Der Träger dient vorzugsweise auch zur Verbindung der Lichtquelle(n) mit einem Anschluss, über den Strom und/oder Signale an das Beleuchtungsmodul und von dem Beleuchtungsmodul übertragen werden können. Das Beleuchtungsmodul kann zusätzlich Kühlelemente in Form von Kühlrippen aufweisen. Zudem kann das Beleuchtungsmodul auch ein Modulgehäuse aufweisen. Das Beleuchtungsmodul dient zum zumindest zeitweise Ausleuchten oder Beleuchten zumindest eines Teils der Umgebung oder zumindest eines Teils des Innenraumes des Haushaltsgerätes.

Das erfindungsgemäße Beleuchtungsmodul weist mindestens eine Lichtquelle auf. Die Lichtquelle kann ein Strahler oder eine Leuchtstofflichtquelle sein. Vorzugsweise stellt die Lichtquelle aber eine Leuchtdiode (LED) dar. Besonders bevorzugt sind mehrere Lichtquellen, insbesondere mehrere Leuchtdioden in dem erfindungsgemäßen Beleuchtungsmodul vorgesehen.

Zudem weist das Beleuchtungsmodul mindestens eine Sensoreinheit auf. Als Sensoreinheit wird im Sinne der vorliegenden Erfindung eine Einheit bezeichnet, die dazu ausgelegt ist, Zustände zu erfassen. Als Zustand kann hierbei insbesondere das Vorliegen von Signalen, beispielsweise IR-Signalen, Funksignalen, Bildsignalen bezeichnet werden. Zusätzlich oder alternativ kann der Zustand den Zustand der Luft betreffen, insbesondere die Zusammensetzung der Luft. Weiterhin kann der Zustand Lichtbedingungen oder Bewegungen in der Nähe der Sensoreinheit betreffen. Die Sensoreinheit kann aus einem oder mehreren Teilen bestehen. Insbesondere umfasst die Sensoreinheit vorzugsweise eine Erfassungseinheit, die beispielsweise den eigentlichen Sensor oder einen Signalempfänger, das heißt eine Empfangseinheit und/oder eine Antenne darstellen kann.

Weiterhin weist das Beleuchtungsmodul nach der Erfindung zumindest eine Anschlusseinheit auf. Die Anschlusseinheit stellt eine gemeinsame Anschlusseinheit dar, die mit der mindestens einen Lichtquelle und dem mindestens einen Sensoreinheit verbunden ist und zur Verbindung des Beleuchtungsmoduls mit zumindest einer Steuereinheit des Haushaltsgerätes dient. Es können aber auch mehrere Anschlusseinheiten vorgesehen sein, wobei eine Anschlusseinheit mit den Lichtquellen verbunden ist und zur Verbindung mit mindestens einer Steuereinheit des Haushaltgerätes dient und mindestens eine weitere separate Anschlusseinheit mit mindestens einer Sensoreinheit verbunden ist und zur Verbindung mit mindestens einer Steuereinheit des Haushaltsgerätes dient. Die Anschlusseinheit stellt beispielsweise eine Steckerbuchse dar und wird im Folgenden auch als solche bezeichnet. Alternativ kann die Anschlusseinheit aber auch beispielsweise ein fest angelötetes Verbindungskabel, einen Platinenrandstecker oder eine andere Anschlusseinheit, die eine geeignete Anschlusstechnik verwendet, darstellen. Ausführungen, die somit im Folgenden für die Steckerbuchse gemacht werden gelten für die anderen Ausführungsformen der Anschlusseinheit entsprechend und werden nicht separat erläutert. Die Anschlusseinheit ist vorzugsweise an dem Träger, der die Lichtquelle(n) trägt vorgesehen und mit den Lichtquellen, beispielsweise über Leiterbahnen oder Kabel mit der Anschlusseinheit verbunden. Vorzugsweise dient die Anschlusseinheit auch dazu das Beleuchtungsmodul und insbesondere die Lichtquelle(n) mit einer Stromquelle zu verbinden. Über die Anschlusseinheit(en) können somit sowohl die Lichtquelle(n) als auch die Sensoreinheit(en) mit Steuereinheiten des Haushaltsgerätes verbunden werden. Über diese Verbindung können beispielsweise die Lichtquellen angesteuert, insbesondere aktiviert werden. Zudem können von den Sensoreinheiten Signale oder Informationen an eine oder mehrere Steuereinheiten übermittelt werden. Die Steuereinheit mit der das Beleuchtungsmodul über die Anschlusseinheit verbunden werden kann, stellt beispielsweise die Steuereinheit zur Steuerung der Grundfunktion des Haushaltsgerätes dar. Bei einer Dunstabzugshaube kann die Steuereinheit daher beispielsweise die Steuereinheit des Lüftermotors sein. Alternativ oder zusätzlich kann die Steuereinheit aber auch beispielsweise eine Steuereinheit für eine Zusatzfunktionalität sein, beispielsweise eine Steuereinheit zum Ansteuern der Lichtquellen sein. In einigen Geräten sind alle Steuereinheiten für die Grundfunktion und Zusatzfunktionalitäten in einer Hauptsteuerung zusammen gefasst. Bei solchen Geräten kann das Beleuchtungsmodul mit der Hauptsteuerung verbunden werden.

Indem bei dem erfindungsgemäßen Beleuchtungsmodul eine Anschlusseinheit für die Lichtquelle(n) und die Sensoreinheit(en) an dem Beleuchtungsmodul vorgesehen ist, ist der Aufbau des Beleuchtungsmoduls vereinfacht. Der Aufbau vereinfacht sich noch weiter, wenn eine gemeinsame Anschlusseinheit für sowohl die Lichtquelle(n) als auch für die Sensoreinheit(en) an dem Beleuchtungsmodul vorgesehen ist. Indem zudem mindestens eine Sensoreinheit in dem Beleuchtungsmodul vorgesehen ist, sind der Gesamtaufbau und die Herstellung des Haushaltsgerätes vereinfacht, da die Sensoreinheit nicht separat in dem Haushaltsgerät eingebaut werden muss. Schließlich kann durch die Integration einer oder mehrerer Sensoreinheiten in das Beleuchtungsmodul eine einfache und geeignete Platzierung der Sensoreinheit(en) erzielt werden. Das Gehäuse des Haushaltsgerätes ist in der Regel aus Metall oder Kunststoff hergestellt. Für die Beleuchtungsfunktion ist an einem Haushaltsgerät daher stets eine Öffnung in dem Gehäuse vorgesehen, die in der Regel mittels einer Scheibe abgedeckt ist. Durch die Öffnung kann das Licht von der oder den Lichtquellen hindurch treten. Indem die Sensoreinheit(en) in dem Beleuchtungsmodul integriert sind, kann die für die Beleuchtung vorgesehene Öffnung in dem Gehäuse des Haushaltsgerätes auch für diese Sensoreinheiten genutzt werden und das Vorsehen einer separaten Öffnung in dem Gehäuse des Haushaltsgerätes kann entfallen.

Dies ist von Vorteil, da solche Öffnungen in der Regel unerwünscht sind. Zum einen haben diese einen Einfluss auf das Design des Gerätes. Zum anderen erfordern sie eine zusätzliche Abdeckung aus einem für Signale durchlässigem Material. Zudem sollte die Abdeckung je nach Anwendungsfall aus einem transparenten oder teiltransparenten Material ausgeführt werden, was zur Sichtbarkeit der dahinter liegenden Komponenten führen kann. Schließlich sind die Öffnungen Prüf- und Approbationsrelevant.

Als Gehäuse des Haushaltsgerätes wird das die Außenseite und/oder den Innenraum des Haushaltsgerätes bildende oder begrenzende Material bezeichnet.

Erfindungsgemäß weist das Beleuchtungsmodul einen Träger für die mindestens eine Lichtquelle auf. Der Träger stellt erfindungsgemäß einen plattenförmigen Träger dar, der auch als Platine bezeichnet wird. Die mindestens eine Sensoreinheit ist auf dem Träger vorgesehen. Hierbei kann die Sensoreinheit auf die Oberfläche des Trägers aufgesetzt oder aufgebracht sein. Es ist aber auch möglich, dass zumindest ein Teil der Sensoreinheit in die Oberfläche des Trägers eingebracht wird. In jedem der Fälle liegt die Sensoreinheit vorzugsweise in der Fläche des Trägers. Dies bedeutet, dass in senkrechter Projektion auf die Fläche des Trägers die Sensoreinheit(en) vorzugsweise nicht über den Rand der Fläche hinausragen. Lediglich Halterungen der Sensoreinheit, über die die Erfassungseinheit der Sensoreinheit an dem Träger gehalten wird, können gegebenenfalls über den Rand des Trägers hinausragen. Die Erfassungseinheit, beispielsweise eine Antenne, ein Signalempfänger oder ein Sensor, hingegen liegen auch bei dieser Ausführungsform vorzugsweise in der Fläche des Trägers. Durch diese Anordnung der Sensoreinheit(en) auf dem Träger kann das Beleuchtungsmodul und insbesondere der Träger in einen Bauraum aufgenommen werden, der bei herkömmlichen Haushaltsgeräten für das Beleuchtungsmodul und insbesondere für den Träger vorgesehen ist. Eine bauliche Änderung des Haushaltsgerätes ist in dieser Hinsicht bei der Ausführungsform nicht erforderlich.

Die Sensoreinheit(en) werden zudem auf der Seite des Trägers, an der die mindestens eine Lichtquelle vorgesehen ist, vorgesehen. Diese Seite des Trägers, die auch als Vorderseite des Trägers bezeichnet werden kann, stellt die Seite des Trägers und damit des Beleuchtungsmoduls dar, von der aus das Licht von den Lichtquellen abgegeben wird. Indem die Sensoreinheit(en) auf dieser Seite des Trägers und damit des Beleuchtungsmoduls vorgesehen sind, kann eine Reihe von Vorteilen erzielt werden.

Um eine Beleuchtung des Innenraums oder der Umgebung des Haushaltsgerätes zu ermöglichen, ist bei Haushaltsgeräten an dem Gehäuse im Bereich des Beleuchtungsmoduls eine Aussparung vorgesehen, die gegebenenfalls durch eine Scheibe, die lichtdurchlässig ist, abgedeckt ist. Da die Sensoreinheit(en) auch in diesem Bereich angeordnet sind, sind diese zumindest für Wellensignale teilweise erreichbar und ein Vorsehen einer separaten Öffnung in dem Gehäuse des Haushaltsgerätes kann entfallen. Zudem ist ein separates Einbauen der Sensoreinheiten in das Haushaltsgerät nicht erforderlich, so dass der Zusammenbau des Haushaltsgerätes ebenfalls vereinfacht wird. Zudem ist auch der Platzbedarf durch die Anordnung der Sensoreinheit(en) auf dem Träger des Beleuchtungsmoduls minimiert. Die Sensoreinheit(en) können gemäß einer Ausführungsform der vorliegenden Erfindung die gleiche Anschlusseinheit, wie die Lichtquellen verwenden. Bei dieser Ausführungsform ist das Vorsehen einer separaten Anschlusseinheit nicht erforderlich. Schließlich ist auch ein Vorsehen eines separaten Trägers für die Sensoreinheit(en) nicht erforderlich, wodurch sich der Aufbau des Haushaltsgerätes weiter vereinfacht und der Platzbedarf in dem Haushaltsgerät sich weiter verringert.

Als Lichtquelle können unterschiedliche Leuchtmittel verwendet werden. Vorzugsweise ist aber mindestens eine der mindestens einen Lichtquelle und besonders bevorzugt alle Lichtquellen Leuchtdioden (LEDs). Diese Art der Lichtquelle weist neben den bekannten Vorteilen, wie beispielsweise der gleichmäßigen Ausleuchtung und der geringen Wärmeentwicklung für die Erfindung eine Reihe weiterer Vorteile auf. So können LEDs auf einfache Weise auf einen Träger, insbesondere auf eine Platine aufgebracht werden. Der Platzbedarf der LEDs ist hierbei auf der Platine gering, so dass ausreichend Platz ist, Sensoreinheit(en) ebenfalls auf dem Träger vorzusehen. Zudem sind auch leichte Abweichungen eines Musters, in dem die LEDs auf dem Träger aufgebracht sind bei der Ausleuchtung des Bereiches, der durch das Beleuchtungsmodul beleuchtet werden soll, kaum zu erkennen, so dass auch bei Sensoreinheiten, die einen größeren Platzbedarf haben, als ein zwischen in einem Muster aufgebrachten LEDs bestehender Abstand verwendet werden können. Bei diesen Sensoreinheiten kann entweder ein Teil der LEDs abgedeckt oder bereits bei der Herstellung des Trägers mit den LEDs ausgespart werden. Der Träger mit darauf vorgesehenen LEDs als Lichtquellen wird im Folgenden auch als LED-Platine bezeichnet.

Gemäß einer Ausführungsform ist in dem Beleuchtungsmodul eine Auswerteeinheit zum Auswerten der Signale mindestens einer der mindestens einen Sensoreinheit vorgesehen. Die Auswerteeinheit kann ebenfalls vorzugsweise auf dem Träger des Beleuchtungsmoduls vorgesehen sein. Hierbei kann die Auswerteeinheit auf der Vorderseite oder der Rückseite des Trägers vorgesehen sein. Die Anordnung auf der Rückseite ist insbesondere möglich, da die Auswerteeinheit in der Regel keine weiteren Zustände erfassen muss, die über eine Öffnung in das Gehäuse des Haushaltsgerätes eingetragen werden. Die Auswerteeinheit kann einen Teil der Sensoreinheit darstellen, ist aber vorzugsweise zumindest mit der Erfassungseinheit der Sensoreinheit verbunden. Indem die Auswerteeinheit ebenfalls in dem Beleuchtungsmodul integriert ist, ist der Aufbau des Haushaltsgerätes weiter vereinfacht. Auch die Verschaltung des Haushaltsgerätes ist vereinfacht, da über die Anschlusseinheit des Beleuchtungsmoduls bereits ausgewertete Informationen an eine Steuereinheit des Haushaltsgerätes übermittelt werden können.

Gemäß einer bevorzugten Ausführungsform stellt der Träger des Beleuchtungsmoduls eine Platine dar und zumindest die mindestens eine Sensoreinheit, die mindestens eine Lichtquelle und die mindestens eine Steckerbuchse, ein Verbindungskabel oder einen Platinenrandstecker als Anschlusseinheit sind an der Platine vorgesehen. Ein Vorteil dieser Ausführungsform besteht darin, dass die relativen Positionen der einzelnen Komponenten des Beleuchtungsmoduls zueinander fest vorgegeben sind und so eine Ausrichtung der einzelnen Komponenten beim Einbau in das Haushaltsgerät nicht erforderlich ist. Zudem können die Verbindungen zwischen den Lichtquellen, die vorzugsweise LEDs darstellen und der Anschlusseinheit, die beispielsweise eine Steckerbuchse darstellt, durch Leiterbahnen auf der Platine hergestellt sein. Zudem sind vorzugsweise auch die Verbindungen zwischen den Sensoreinheit(en) und der Anschlusseinheit durch Leiterbahnen verwirklicht.

Gemäß einer Ausführungsform weist die Sensoreinheit einen Sensor zum Erfassen zumindest eines Zustandes der Umgebung des Haushaltsgerätes auf. Der Sensor kann hierbei beispielsweise ein Luftgütesensor, ein Gassensor, ein Helligkeitssensor und/oder ein Bewegungssensor sein.

Bei einem Luftgütesensor handelt es sich um einen Sensor, der beispielsweise die beim Kochen entstandenen dampf- oder gasförmigen Stoffe erfasst. Die Sensorsignale eines solchen Sensors können gegebenenfalls über eine Auswerteeinheit dazu verwendet werden den Volumenstrom eines lüftungstechnischen Haushaltsgerätes, insbesondere einer Dunstabzugshaube, in Abhängigkeit von der Konzentration der detektierten Stoffe zu steuern. Hierzu ist die Anschlusseinheit bei dieser Ausführungsform zumindest mit der Steuerung des Lüftermotors der Dunstabzugshaube verbunden.

Ein Gassensor, der zusätzlich oder alternativ zu einem Luftgütesensor in dem Beleuchtungsmodul vorgesehen sein kann, kann beispielsweise dazu dienen eine erhöhte CO-Konzentration in der Küchenluft, die durch den Betrieb eines Gaskochfeldes entstehen kann, zu überwachen. Gegebenenfalls kann bei Erkennen einer erhöhten CO-Konzentration ein Einschalten der Dunstabzugshaube zwecks Reduzierung der CO-Konzentration erfolgen. Zu diesem Zweck kann die Anschlusseinheit bei dieser Ausführungsform zumindest mit der Steuerung des Lüftermotors der Dunstabzugshaube verbunden sein. Zudem kann mittels eines Gassensors beispielsweise eine Überwachung von Gasleckagen erfolgen.

Ein Helligkeitssensor kann beispielsweise bei einem Haushaltsgerät, das einen Kühlschrank darstellt, vorteilhaft eingesetzt werden. In diesem Fall kann der Helligkeitssensor den Tür-Kontaktschalter zum Einschalten der Innenbeleuchtung ersetzen. Zu diesem Zweck kann die Anschlusseinheit des Beleuchtungsmoduls bei dieser Ausführungsform zumindest mit der Steuerung zur Ansteuerung der Lichtquellen verbunden sein.

Ein Bewegungssensor kann bei unterschiedlichen Haushaltsgeräten zu unterschiedlichen Zwecken eingesetzt sein. So kann beispielsweise die Steuerung der Beleuchtung einer Dunstabzugshaube unter Verwendung eines Bewegungssensors erfolgen. Hierbei ist dann die Anschlusseinheit vorzugsweise mit der Steuerung zur Ansteuerung der Lichtquellen verbunden sein. Bei einem Kühlschrank kann ein Bewegungssensor beispielsweise dazu verwendet werden, dass beispielsweise bei Erkennen einer Bewegung der Türe das Ein- oder Ausschalten der Innenbeleuchtung bei einem Küchenschrank erfolgt. Der in das Beleuchtungsmodul integrierte Bewegungssensor, der auch als Bewegungsmelder bezeichnet werden kann, kann somit den Tür-Kontaktschalter ersetzen.

Gemäß einer weiteren Ausführungsform weist die Sensoreinheit eine Empfangseinheit für den Empfang von Wellensignalen, insbesondere eines Funksignals, eines Infrarotsignals oder eines Lichtsignals, auf. Durch diese Ausführungsformen können beispielsweise die Fernbedienung des Haushaltsgerätes oder eine Kamerafunktion als zusätzliche Zusatzfunktionalitäten in dem Haushaltsgerät vorgesehen sein.

Ist in der Sensoreinheit des Beleuchtungsmoduls eine Empfangseinheit für den Empfang von Funksignalen oder Infrarotsignalen vorgesehen, so können diese zur Fernbedienung des Haushaltsgerätes dienen. Bei dieser Ausführungsform wird vorzugsweise die Anschlusseinheit mit der Steuereinheit des Lüftermotors und/oder der Steuereinheit zur Ansteuerung der Lichtquellen verbunden.

Handelt es sich bei der Empfangseinheit um eine Einheit zum Empfang von Lichtsignalen, so kann die Empfangeinheit beispielsweise die Optik einer Kamera, insbesondere eine Linse, darstellen. Die eine Linse oder mehreren Linsen können dann mit einer ebenfalls in dem Beleuchtungsmodul vorgesehenen Kamera, beispielsweise über Lichtleiter verbunden sein. Durch das Vorsehen einer solchen Sensoreinheit, die eine Kamera umfasst, kann beispielsweise das Überwachen des Innenraums eines Kühlschrankes zwecks Überprüfung des Lebensmittelbestandes erfolgen. Auch ist beispielsweise die Beobachtung des Gargutes in einem Backofen möglich. Hierbei kann der Innenraum des Backofens beispielsweise während der gesamten Dauer des Backvorgangs überwacht werden.

In dem Beleuchtungsmodul kann eine einzige Sensoreinheit vorgesehen sein. Allerdings ist es im Rahmen der Erfindung auch möglich und je nach Anwendungsfall auch bevorzugt, dass in dem Beleuchtungsmodul mindestens zwei Sensoreinheiten enthalten sind. Die mehreren Sensoreinheiten können alle der gleichen Art sein. Vorzugsweise sind aber die mehreren Sensoreinheiten unterschiedlicher Art. Bei dieser Ausführungsform wird somit eine Kombination unterschiedlicher Arten von Sensoreinheiten in dem Beleuchtungsmodul vorgesehen.

Die Sensoreinheiten unterschiedlicher Art unterscheiden sich insbesondere durch die darin vorgesehenen Sensoren oder Empfangseinheiten. So kann beispielsweise in einem Beleuchtungsmodul eine Sensoreinheit eine Empfangseinheit für Funk- oder IR-Signale aufweisen und eine weitere Sensoreinheit kann einen Gassensor aufweisen.

Die einzelnen Sensoreinheiten können hierbei unabhängig separat voneinander agieren. Hierdurch wird die Ansteuerung unterschiedlicher Zusatzfunktionalitäten oder Grundfunktionen des Haushaltsgerätes ermöglicht. Allerdings ist es auch möglich die mehreren unterschiedlichen Sensoreinheiten so zu verwenden, dass diese vernetzt eine gemeinsame Zusatzfunktionalität oder Grundfunktion des Haushaltsgerätes.

Beispielsweise kann eine Kombination von einer Sensoreinheit, die eine Empfangseinheit für IR- oder Funksignale, die auch als Empfänger bezeichnet werden kann, und eine Sensoreinheit, die einen Gassensor umfasst, in einem Beleuchtungsmodul einer Dunstabzugshaube in Kombination miteinander eingesetzt werden. In diesem Fall erfüllen die Sensoreinheiten unterschiedliche Funktionalitäten, insbesondere die Zusatzfunktionalität der Überwachung der Luftzusammensetzung und die Grundfunktion des Betriebes der Dunstabzugshaube nämlich des Betrieb des Lüftermotors und gegebenenfalls zusätzlich auch der Beleuchtung. Die Sensoreinheiten agieren hierbei unabhängig voneinander.

Sind hingegen bei einer Dunstabzugshaube eine Sensoreinheit mit einem IR-Sensor und eine Sensoreinheit mit einem Gassensor zur Überwachung der Brandgefahr auf dem Kochfeld unterhalb der Dunstabzugshaube vorgesehen, so agieren die Sensoreinheiten gemeinsam. Die gemeinsame Verarbeitung oder Berücksichtigung der so erfassten Sensorsignale kann nach einem vorgegebenen Algorithmus erfolgen.

Alternativ oder zusätzlich kann beispielsweise eine Anordnung mehrerer Sensoreinheiten mit jeweils einer Kamera oder einer Sensoreinheit mit mehreren Linsen und einer Kamera im Bereich des Lampenraums eines Kühlschrankes zur getrennten Überwachung verschiedener Ablagezonen verwendet werden. Die Kameras oder unterschiedlichen Linsen erfüllen hierbei gleiche Funktionalität der optischen Überwachung, werden aber getrennt angesteuert.

Gemäß einem weiteren Aspekt betrifft die Erfindung ein Haushaltsgerät mit mindestens einem erfindungsgemäßen Beleuchtungsmodul. Das Haushaltsgerät ist dadurch gekennzeichnet, dass das Beleuchtungsmodul so angeordnet ist, dass zumindest die mindestens eine Sensoreinheit mit einem zumindest lichtdurchlässigen Bereich des Gehäuses des Haushaltsgerätes ausgerichtet ist.

Vorteile und Merkmale, die bezüglich des erfindungsgemäßen Beleuchtungsmoduls beschrieben werden, gelten - soweit anwendbar - auch für das erfindungsgemäße Hauhaltsgerät und jeweils umgekehrt.

Als zumindest lichtdurchlässiger Bereich des Gehäuses des Haushaltsgerätes wird vorzugsweise eine Aussparung in dem Gehäuse des Haushaltsgerätes verstanden. Diese Aussparung kann durch eine Scheibe aus Glas oder Kunststoff oder dergleichen abgedeckt sein, die im Folgenden als Abdeckscheibe bezeichnet wird. Somit stellt der zumindest lichtdurchlässige Bereich die Abdeckscheibe dar. Hinter dem zumindest lichtdurchlässigen Bereich ist in dem Gehäuse des Haushaltsgerätes das Beleuchtungsmodul angeordnet. Durch diese Positionierung des Beleuchtungsmoduls wird zum einen das gewollte Beleuchten oder Ausleuchten des Innenraums oder eines Teils der Umgebung des Haushaltsgerätes ermöglicht, da das Licht von den Lichtquellen durch den zumindest lichtdurchlässigen Bereich hindurch treten kann. Das Beleuchtungsmodul ist hierzu so angeordnet, dass die Vorderseite des Trägers der Lichtquellen, insbesondere der LED-Platine, dem zumindest lichtdurchlässigen Bereich zugewandt ist. Der Raum hinter dem zumindest lichtdurchlässigen Bereich kann auch als Lampenraum bezeichnet werden.

Zudem ist zumindest die mindestens eine Sensoreinheit mit einem zumindest lichtdurchlässigen Bereich des Gehäuses des Haushaltsgerätes ausgerichtet. Vorzugsweise ist die Sensoreinheit so angeordnet, dass bei senkrechter Projektion auf den zumindest lichtdurchlässigen Bereich die mindestens eine Sensoreinheit in der Fläche des zumindest lichtdurchlässigen Bereichs liegt. Besonders bevorzugt liegt zumindest die Erfassungseinheit der Sensoreinheit, das heißt der Sensor und/oder die Empfangseinheit, in der Fläche des zumindest lichtdurchlässigen Bereiches. Somit liegen die Sensoreinheit(en) hinter der Aussparung oder der diese abdeckenden Scheibe. Durch die Aussparung können die Sensoreinheit(en) die Zustände erfassen, die mittels der Sensoreinheiten überwacht werden sollen. Insbesondere kann eine Sensoreinheit mit einem IR-Empfänger das Vorliegen von IR-Signalen durch die Aussparung hindurch überwachen. Ist in der Aussparung eine Scheibe vorgesehen, so kann gegebenenfalls ein Teil der Scheibe eine andere Oberflächenbeschaffenheit aufweisen, als der Rest der Scheibe. Dies ist zum Beispiel bei einer Sensoreinheit notwendig, bei der eine Kamera verwendet wird. In diesem Fall kann beispielsweise bei einer beschichteten Scheibe in dem Teil, in dem die Linsen hinter der Scheibe angeordnet sind, die Beschichtung ausgespart sein. Alternativ kann bei dieser Ausführungsform beispielsweise auch die Linse in die Scheibe eingearbeitet sein.

Indem bei dem erfindungsgemäßen Haushaltsgerät das Beleuchtungsmodul, das zumindest eine Sensoreinheit aufweist, mit dem zumindest lichtdurchlässigen Bereich des Gehäuses des Haushaltsgerätes ausgerichtet ist, ist es somit nicht erforderlich in dem Material des Gehäuses des Haushaltsgerätes eine separate Öffnung für die Sensoreinheit vorzusehen.

Gemäß einer weiteren Ausführungsform ist die mindestens eine Sensoreinheit hinter einer Öffnung in dem lichtdurchlässigen Bereich des Gehäuses des Haushaltsgerätes angeordnet. Diese Ausführungsform ist besonders von Vorteil bei Sensoreinheiten, die zum Erfassen der Zustände mit der Luft außerhalb des Gehäuses des Haushaltsgerätes in Kontakt treten müssen. Somit wird insbesondere bei Sensoreinheiten, die Gassensoren oder Luftgütesensoren aufweisen vorzugsweise in dem lichtdurchlässigen Bereich eine Öffnung vorgesehen. Aber auch bei anderen Ausführungsformen der Sensoreinheit kann eine solche Öffnung vorgesehen sein. Beispielsweise kann die Qualität eines Kamerabildes verbessert werden, wenn die Linse oder Linsen hinter einer Öffnung vorgesehen sind und somit nicht durch das Material des zumindest lichtdurchlässigen Bereiches Aufnahmen gemacht werden müssen.

Die Öffnung in dem lichtdurchlässigen Bereich kann insbesondere einen Durchlass in einer Scheibe, die den lichtdurchlässigen Bereich abdeckt, sein.

Gemäß einer bevorzugten Ausführungsform ist das Haushaltsgerät eine Dunstabzugshaube. Bei Dunstabzugshauben können die mit der vorliegenden Erfindung zu erzielenden Vorteile besonders gut genutzt werden.

Insbesondere ist bei Dunstabzugshauben der Bauraum, der für das Vorsehen von Komponenten in der Dunstabzugshaube gegeben ist, relativ gering. Da bei dem erfindungsgemäßen Beleuchtungsmodul eine Anschlusseinheit für die Lichtquelle(n) und die Sensoreinheit(en) an dem Beleuchtungsmodul vorgesehen ist, ist der Aufbau des Beleuchtungsmoduls vereinfacht und zudem ist durch die Integration der Sensoreinheit(en) der Platzbedarf reduziert. Weiterhin besteht das Gehäuse einer Dunstabzugshaube in der Regel aus Metall. Für die Beleuchtungsfunktion, insbesondere die Beleuchtung von zumindest einem Teil der Arbeitsfläche und insbesondere des Kochfeldes unterhalb der Dunstabzugshaube ist an Dunstabzugshauben daher in der Regel eine Öffnung in dem Gehäuse der Dunstabzugshaube vorgesehen. Durch die Öffnung kann das Licht von der oder den Lichtquellen hindurch treten, wobei das Beleuchtungsmodul in der Regel durch eine Abdeckscheibe, die die Öffnung abdeckt, geschützt ist. Indem die Sensoreinheit(en) in dem Beleuchtungsmodul integriert sind, kann die für die Beleuchtung vorgesehene Öffnung in dem Gehäuse der Dunstabzugshaube auch für diese Sensoreinheiten genutzt werden und das Vorsehen einer separaten Öffnung in dem Gehäuse der Dunstabzugshaube kann entfallen.

Auch die Anordnung der mindestens einen Sensoreinheit hinter einer Öffnung in dem lichtdurchlässigen Bereich des Gehäuses der Dunstabzugshaube, insbesondere hinter einer Öffnung in der Abdeckscheibe des Lampenraums der Dunstabzugshaube ist bei Dunstabzugshauben von besonderem Vorteil. Bei Dunstabzugshauben werden zumindest teilweise Sensoreinheiten, die zum Erfassen der Zustände mit der Luft außerhalb des Gehäuses der Dunstabzugshaube in Kontakt treten müssen, verwendet. Somit wird insbesondere bei Sensoreinheiten, die Gassensoren oder Luftgütesensoren aufweisen vorzugsweise in der Abdeckscheibe der Dunstabzugshaube eine Öffnung vorgesehen. Dadurch kann beispielsweise der Wrasen, der beim Kochen auf dem Kochfeld entsteht bei der erfindungsgemäßen Dunstabzugshaube einfach und zuverlässig erkannt werden beziehungsweise durch Gassensoren oder Luftgütesensor erfasst werden.

Gemäß einer bevorzugten Ausführungsform ist das erfindungsgemäße Beleuchtungsmodul ein Beleuchtungsmodul zum Beleuchtung zumindest eines Teils einer Kochstelle unterhalb der Dunstabzugshaube. Diese Beleuchtungsmodule sind in der Regel in der Unterseite der Dunstabzugshaube vorgesehen. Zudem sind diese Beleuchtungsmodule in der Regel so ausgerichtet, dass diese für den Benutzer der Dunstabzugshaube nicht sichtbar sind, um ein Blenden des Benutzers zu verhindern. Ein Vorteil, den der Einsatz eines erfindungsgemäßen Beleuchtungsmoduls als ein solches Beleuchtungsmodul mit sich bringt, ist daher neben den bereits genannten Vorteilen, dass die Sensoreinheit(en), die an dem Beleuchtungsmodul vorgesehen sind, ebenfalls für den Benutzer nicht sichtbar sind.

Die Erfindung wird im Folgenden erneut unter Bezugnahme auf die beiliegenden Figuren beschrieben. Es zeigen:
Figur 1: eine schematische Darstellung des Einbaus eines Beleuchtungsmoduls in einem Haushaltsgerät gemäß einer Ausführungsform der Erfindung;
Figur 2: eine schematische Darstellung einer Ausführungsform des erfindungsgemäßen Beleuchtungsmoduls;
Figur 3: eine schematische Darstellung einer Ausführungsform des erfindungsgemäßen Beleuchtungsmoduls;
Figur 4: eine schematische Darstellung einer Ausführungsform des erfindungsgemäßen Beleuchtungsmoduls;
Figur 5: eine schematische Darstellung einer Ausführungsform des erfindungsgemäßen Beleuchtungsmoduls; und
Figur 6: eine schematische Darstellung des Einbaus eines Beleuchtungsmoduls in einem Haushaltsgerät gemäß einer Ausführungsform der Erfindung.

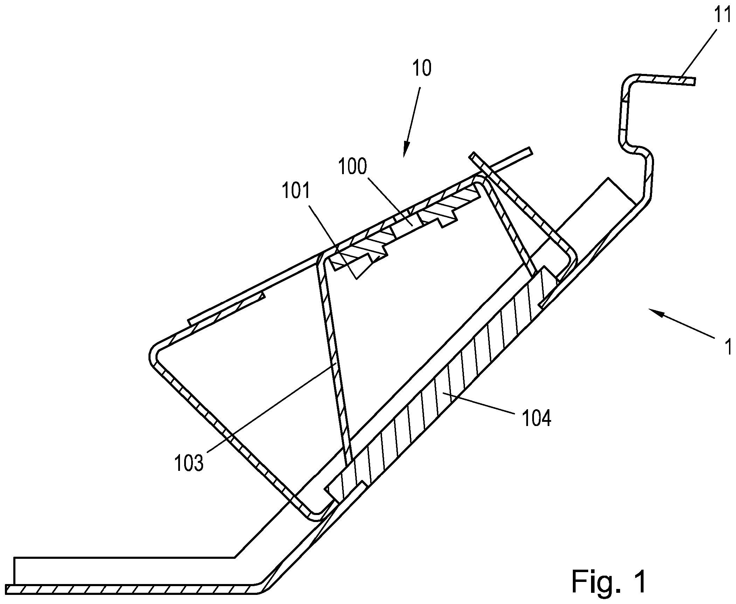

In Figur 1 ist eine Ausführungsform eines Haushaltsgerätes 1 mit einer Ausführungsform eines Beleuchtungsmoduls 10 schematisch gezeigt. Figur 1 zeigt insbesondere eine schematische Darstellung des Einbaus eines Beleuchtungsmoduls 10 in einem Haushaltsgerät 1 gemäß einer Ausführungsform der Erfindung. In der dargestellten Ausführungsform stellt das Haushaltsgerät 1 eine Dunstabzugshaube dar, von der in Figur 1 nur der Bereich des Lampenraums gezeigt ist. Das Haushaltsgerät 1 besitzt ein Gehäuse 11, das beispielsweise aus Blech geformt ist. An dem Gehäuse 11 ist ein Beleuchtungsmodul 10 vorgesehen. Das Beleuchtungsmodul ist an dem Gehäuse 11 so vorgesehen, dass dieses hinter dem zumindest lichtdurchlässigen Bereich, der durch eine Abdeckscheibe 104 gebildet wird, liegt. Über die Abdeckscheibe 104 kann Licht von dem Haushaltsgerät abgegeben werden. Das Beleuchtungsmodul 10 umfasst in der dargestellten Ausführungsform eine Platine 100, die den erfindungsgemäßen Träger für Lichtquellen darstellt. Auf der Platine 100 sind Lichtquellen 101, vorzugsweise in Form von LEDs angeordnet. Die Lichtquellen 101 sind auf der Vorderseite der Platine 100 angeordnet, so dass das von den Lichtquellen 101 abgegebene Licht durch die Abdeckscheibe 104 hindurch abgegeben werden kann. Weiterhin umfasst das Beleuchtungsmodul 10 in der dargestellten Ausführungsform einen Reflektor 103, der zwischen der Platine 100 und der Abdeckscheibe 104 angeordnet ist. Der Reflektor 103 kann aber auch als ein separates Teil zu dem Beleuchtungsmodul 10 vorgesehen sein. Die Abdeckscheibe 104 besteht vorzugsweise aus Glas und stellt den zumindest lichtdurchlässigen Bereich des Gehäuses 11 dar. Die Platine 100 ist mit der Öffnung des Gehäuses 11, in der die Abdeckscheibe 104 vorgesehen ist, ausgerichtet.

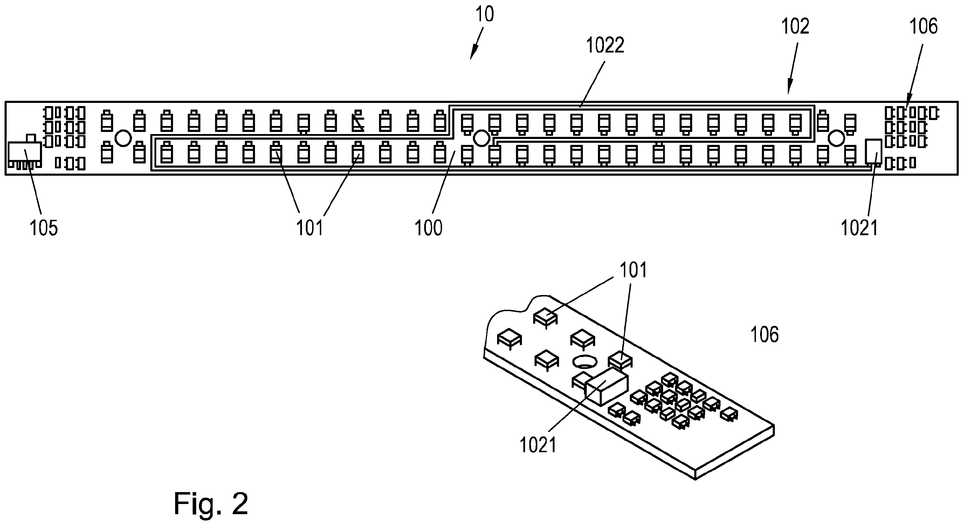

In Figur 2 ist eine schematische Darstellung einer Ausführungsform des erfindungsgemäßen Beleuchtungsmoduls 10 gezeigt. Bei dieser Ausführungsform sind auf der Platine 100 des Beleuchtungsmoduls 10 Lichtquellen 101 in zwei Reihen angeordnet. Die Lichtquellen 101 können aber auch in einem anderen Muster oder in mehr als zwei Reihen auf der Platine 100 angeordnet sein. Die Platine 100 weist die Form einer länglichen Platte auf. In den Endbereichen der Platine 100 sind auf der Platine 100 elektronische Komponenten 106 vorgesehen. Weiterhin ist in einem Endbereich der Platine 100 auf der Vorderseite der Platine 100 eine Anschlusseinheit 105, die auch als Steckerbuchse bezeichnet werden kann, vorgesehen. Zudem weist das Beleuchtungsmodul 10 nach Figur 2 eine Sensoreinheit 102 auf. In der dargestellten Ausführungsform stellt die Sensoreinheit 102 eine Funkempfängereinheit dar. Die Sensoreinheit 102 umfasst eine Empfangseinheit 1021 sowie eine damit verbundene Antenne 1022. Die Empfangseinheit 1021 ist an einem Ende der Platine 100 im Bereich der elektronischen Komponenten 106 angeordnet. Die Antenne 1022 erstreckt sich über die Länge der Platine 100 und verläuft in dem Zwischenraum zwischen den Lichtquellen 101. Die Lichtquellen 101 und die Sensoreinheit 102, insbesondere die Empfangseinheit 1021, sind mit der Anschlusseinheit 105, die somit eine gemeinsame Anschlusseinheit 105 darstellt, verbunden. Es liegt aber auch im Rahmen der Erfindung, separate Anschlusseinheiten (nicht gezeigt) für die Lichtquellen zum einen und die Sensoreinheit(en) zum anderen vorzusehen. Die Verbindung mit der Anschlusseinheit 105 oder den Anschlusseinheiten kann direkt oder über eine oder mehrere der elektronischen Komponenten 106 verlaufen. Die Sensoreinheit 102 ist somit auf dem Träger des Beleuchtungsmoduls 10, das heißt auf der Platine 100 auf der Seite der Platine 100 vorgesehen, an der die Lichtquellen 101 vorgesehen sind. Die Antenne 1022 oder die Empfangseinheit 1021 können aber beispielsweise auch auf der Rückseite der Platine angeordnet sein.

Mit dieser Ausführungsform des Beleuchtungsmoduls 10 nach Figur 2 ist eine Fernbedienung für beispielsweise ein lüftungstechnisches Haushaltsgerät 1 mit Hilfe von Funkfernsteuerung in das Beleuchtungsmodul 10 integriert, wenn das Beleuchtungsmodul 10 beispielsweise in einer Dunstabzugshaube eingesetzt wird.

Die Funkfernsteuerung erfordert hierbei mit der Antenne 1022 zur Erfassung des Funksignals. Im der in Figur 2 gezeigten Ausführungsform ist diese Antenne 1022 in Form von spezifisch gestalteten Leiterbahnen auf der LED-Platine 100 ausgebildet, was die Montage einer zusätzlichen Komponente in Form eines handelsüblichen Antennenelementes erspart.

Die Anordnung der Leiterbahnen für die Antenne 1022 kann beispielsweise durch Integration in das Platinen-Layout der LED-Platine 100 umgesetzt werden, indem der Zwischenraum zwischen den bereits vorhandenen elektronischen Komponenten 106 und den Lichtquellen 101 oder die Randbereiche der LED-Platine 100 sinnvoll genutzt wird. Alternativ oder zusätzlich kann eine doppelseitig beschichtete Platine 100 verwendet werden, wobei die Rückseite ausschließlich für die Antenne 1022 zur Verfügung steht. Optional kann aber auch ein herkömmliches Antennenelement auf der Platine 100 angebracht werden.

Das Funksignal durchdringt die in Figur 1 gezeigte Abdeckscheibe 104 des Gehäuses 11 des Haushaltsgerätes 1, die auch als Lampenglas bezeichnet wird, und wird von der dahinter liegenden Empfangseinheit 1021, die auch als Empfänger bezeichnet wird, erfasst. Die erforderliche Auswerte-Hardware ist vorzugsweise ebenfalls auf der LED-Platine 100 integriert, beispielsweise als eine elektronische Komponente 106. Die empfangenen Signale werden über Leiterbahnen an die gemeinsam genutzte Anschlusseinheit 105 oder an eine für die Sensoreinheit separat vorgesehene Anschlusseinheit (nicht gezeigt), die auch als Steckerbuchse bezeichnet wird, geführt und von dort mittels eines Kabelbaums (nicht gezeigt) zu einer Steuerung (nicht gezeigt) des Haushaltsgerätes 1 weitergeleitet.

Auch bei Verwendung eines herkömmlichen Antennenelementes auf der Platine 100, kann dieses Element die durch die Abdeckscheibe 104 vorgegeben Öffnung im metallischen Gehäuse 11 des Gerätes 1 analog zu der im Vorfeld beschriebenen Leiterbahnlösung nutzen.

Die in Figur 2 gezeigte Ausführungsform des Beleuchtungsmoduls 10 kann insbesondere zum Schalten von Lüftermotor und Beleuchtung des Haushaltsgerätes 1, insbesondere einer Dunstabzugshaube dienen.

Gemäß einer weiteren nicht dargestellten Ausführungsform wird ein Beleuchtungsmodul 10 in einem Haushaltsgerät 1, insbesondere einem lüftungstechnischen Haushaltsgerät 1 verwendet, durch das eine Fernbedienung des Haushaltsgerätes 1 mit Hilfe einer Infrarot-Fernbedienung in das Beleuchtungsmodul 10 integriert ist.

In diesem Fall entspricht der Aufbau des Beleuchtungsmoduls 10 im Wesentlichen dem in Figur 2 gezeigten Aufbau. Allerdings wird für die Infrarot-Fernbedienung keine Antenne benötigt und diese wird daher ausgespart. Bei der Infrarot-Fernbedienung wird auf der Platine daher als Sensoreinheit 102 lediglich eine Empfangseinheit 1021, die einen Infrarotempfänger darstellt, verwendet. Die Anordnung der Empfangseinheit 1021 kann dabei der in Figur 2 gezeigten Anordnung entsprechen. Das Haushaltsgerät 1 wird durch das Signal der Infrarot-Fernbedienung gesteuert. Das Signal durchdringt hierbei die Abdeckscheibe 104, das heißt das Lampenglas, und wird von der dahinter liegenden Empfangseinheit 1021, das heißt dem Empfänger, erfasst. Die erforderliche Auswerte-Hardware ist vorzugsweise ebenfalls auf der LED-Platine 100 integriert, beispielsweise als eine elektronische Komponente 106.

Beim Einsatz einer Abdeckscheibe 104 mit Oberflächenbearbeitung (Milchglas oder beschichtetem Glas) kann die Oberflächenbearbeitung im Bereich der Empfangseinheit 1021 ausgespart werden beziehungsweise an die Anforderungen der Empfangseinheit 1021 angepasst werden.

Die empfangenen Signale können über Leiterbahnen an die gemeinsam genutzte Anschlusseinheit 105 oder an eine für die Sensoreinheit separat vorgesehene Anschlusseinheit (nicht gezeigt) geführt und von dort mittels eines Kabelbaums (nicht gezeigt) zu einer Steuerung (nicht gezeigt) des Haushaltsgerätes 1 weitergeleitet werden.

Auch bei dieser Ausführungsform kann daher durch das Beleuchtungsmodul 10 das Schalten von Lüftermotor und Beleuchtung des Haushaltsgerätes erfolgen.

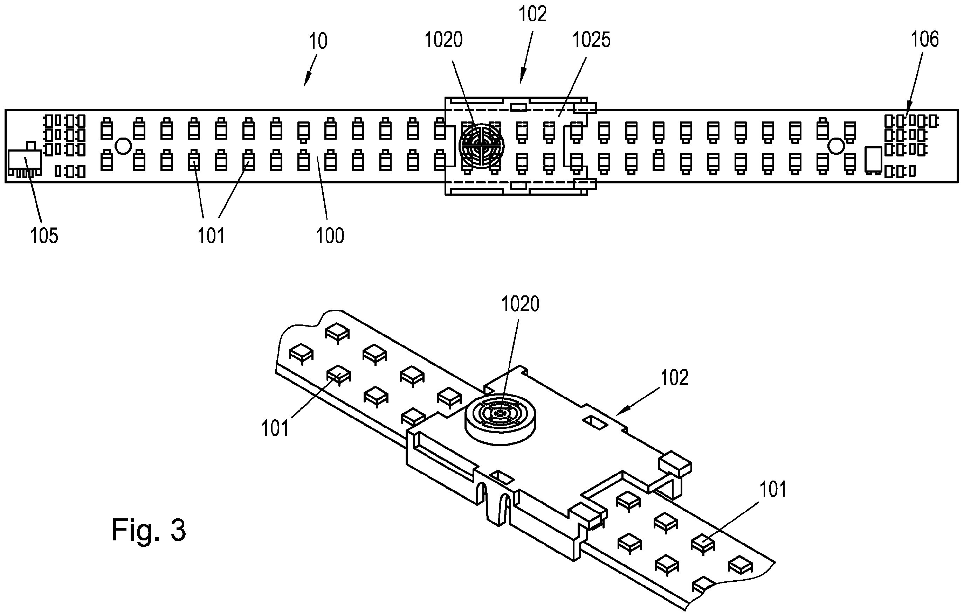

In Figur 3 ist eine schematische Darstellung einer weiteren Ausführungsform des erfindungsgemäßen Beleuchtungsmoduls 10 gezeigt. Bei dieser Ausführungsform ist eine Sensoreinheit 102 zur Erfassung der Luftgüte in das Beleuchtungsmodul 10 integriert. Der weitere Aufbau der Platine 100 und der darauf angeordneten Komponenten, insbesondere der Lichtquellen 101, der Anschlusseinheit 105 und der elektronischen Komponenten 106, entspricht dem bezüglich Figur 2 beschriebenen Aufbau und wird daher nicht erneut erläutert.

Bei der Ausführungsform nach Figur 3 umfasst die Sensoreinheit 102 einen Sensor 1020, der einen Luftgütesensor darstellt. Bei einer Sensoreinheit 102 mit einem Luftgütesensor 1020 kann mittels des Luftgütesensors 1020, der die beim Kochen entstandenen dampf- oder gasförmigen Stoffe erfasst, der Volumenstrom eines lüftungstechnischen Gerätes 1, insbesondere einer Dunstabzugshaube, in Abhängigkeit von der Konzentration der detektierten Stoffe gesteuert werden.

Der Luftgütesensor 1020 ist auf der LED-Platine 100 in einer Halterung 1025 positioniert. Der Sensor 1020 ist in der Halterung 1025 gehalten und wird durch diese geschützt. Die Halterung 1025 wird daher auch als Schutzgehäuse bezeichnet. Die Halterung 1025 weist einen Bereich auf, in dem Durchlässe, in der dargestellten Ausführungsform als Gitteröffnungen gezeigt, vorgesehen sind. Hinter diesen Durchlässen ist der eigentliche Sensor 1020 in der Halterung 1025 vorgesehen. Die Halterung 1025, insbesondere der Bereich mit Durchlässen, ragt durch eine Öffnung in der Abdeckscheibe 104, das heißt im Lampenglas, in den luftdurchströmten Raum, beispielsweise in den Schwadenauffangraum einer Dunstabzugshaube. Der vordere, gitterförmig ausgeführte Bereich der Halterung 1025 ermöglicht somit den Kontakt des Sensors 1020 mit dem zu detektierenden Medium und schützt gleichzeitig den Sensor 1020.

Die Halterung 1025 ist auf die Vorderseite des Trägers, das heißt der Platine 100, aufgesetzt. Somit liegt die Sensoreinheit 102 und insbesondere der Sensor 1020 auf der Seite auf der auch die Lichtquellen 101 vorgesehen sind. Die Halterung 1025 oder zumindest der Teil der Halterung 1025, über den der Sensor 1020 an der Platine 100 gehalten wird, kann aus einem lichtdurchlässigen Material hergestellt sein. Hierdurch kann einer Überdeckung einer oder mehrer Lichtquellen 101, wie in Figur 3 gezeigt, Rechnung getragen werden. Das von diesen Lichtquellen 101 abgegebene Licht kann bei dieser Ausgestaltung der Halterung 1025 nämlich weiter abgegeben werden.

Die erforderliche Auswerte-Hardware ist auch bei dieser Ausführungsform vorzugsweise ebenfalls auf der LED-Platine 100 integriert, beispielsweise als eine elektronische Komponente 106. Die empfangenen Signale können über Leiterbahnen an die gemeinsam genutzte Anschlusseinheit 105 oder an eine für die Sensoreinheit separat vorgesehene Anschlusseinheit (nicht gezeigt) geführt und dort mittels eines Kabelbaums (nicht gezeigt) zu einer Steuerung (nicht gezeigt) des Hauhaltsgerätes 1 weitergeleitet werden.

Diese Ausführungsform des Beleuchtungsmoduls 10 kann insbesondere zum Schalten des Lüftermotors in einem Haushaltsgerät 1, das eine Dunstabzugshaube darstellt, eingesetzt werden.

Gemäß einer weiteren nicht gezeigten Ausführungsform wird eine Sensoreinheit 102 in das Beleuchtungsmodul 10 integriert, die als Sensor 1020 einen Gassensor aufweist. Der Gassensor kann alternativ oder zusätzlich zum Luftgütesensor eingesetzt werden. Der Gassensor kann beispielsweise dazu dienen die folgenden Einsatzfälle abzudecken. Beispielsweise kann die Überwachung der durch den Betrieb eines Gaskochfeldes erhöhten CO-Konzentration in der Küchenluft und gegebenenfalls Einschalten der Dunstabzugshaube zwecks Reduzierung der CO-Konzentration erfolgen. Zudem kann beispielsweise eine Überwachung von Gasleckagen erfolgen.

Die Anbringung eines entsprechenden Sensors erfolgt beispielsweise unmittelbar auf der Platine 100 des Beleuchtungsmoduls 10 oder, wie in Figur 3 gezeigt mittels einer Halterung 1025. Somit kann der Gassensor auf der LED Beleuchtungsplatine 100, in einer über einem Gaskochfeld angeordneten Dunstabzugshaube integriert sein.

Beim Ansteuern des Abluftgebläses eines Haushaltsgerätes 1, das eine Dunstabzugshaube darstellt, kann es erforderlich sein, für ausreichend Zuluft im Raum zu sorgen. Dies kann durch Nutzung eines Signals zwecks Öffnens einer motorisch betätigten Zuluftklappe oder zum Einschalten eines Zuluftgebläses geschehen. Dieses Signal kann bei der Ausführungsform, bei der in dem Beleuchtungsmodul 10 ein Gassensor vorgesehen ist, durch den Gassensor geliefert werden.

Diese Ausführungsform des Beleuchtungsmoduls mit Gassensor dient daher primär zum Schalten des Lüftermotors. Allerdings kann diese Ausführungsform auch zur Steuerung eines Zuluftmotors oder zur Klappensteuerung verwendet werden. Hierbei wird die Anschlusseinheit 105 des Beleuchtungsmoduls 10 mit den entsprechenden Steuerrungen des Haushaltsgerätes 1, insbesondere der Dunstabzugshaube, verbunden.

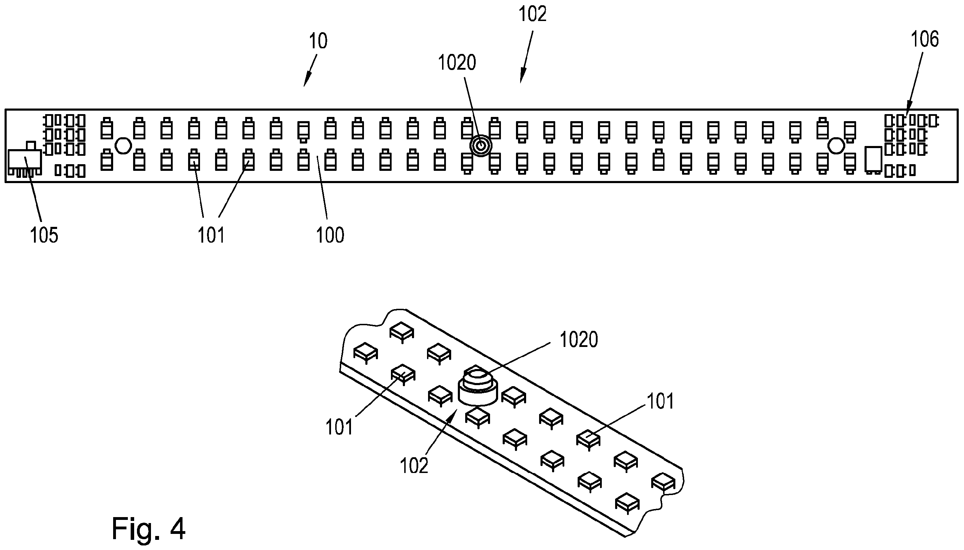

In Figur 4 ist eine schematische Darstellung einer weiteren Ausführungsform des erfindungsgemäßen Beleuchtungsmoduls gezeigt. Gemäß dieser Ausführungsform wird eine Sensoreinheit 102 mit einem ein Helligkeitssensor als Sensor 1020 in das Beleuchtungsmodul 10 integriert. Der weitere Aufbau der Platine 100 und der darauf angeordneten Komponenten, insbesondere der Lichtquellen 101, der Anschlusseinheit 105 und der elektronischen Komponenten 106, entspricht dem bezüglich Figur 2 beschriebenen Aufbau und wird daher nicht erneut erläutert.

In der dargestellten Ausführungsform in Figur 4 ist der Helligkeitssensor 1020 auf der Vorderseite der Platine 100 in der Mitte zwischen Lichtquellen 101 angeordnet.

Der auf der LED-Platine 100 angeordneter Helligkeitssensor 1020 kann zur Steuerung der Lichtintensität bei einer Dunstabzugshaube als Haushaltsgerät 1 eingesetzt werden. Dabei kann der Sensor 1020 beispielsweise durch eine Öffnung in der Abdeckscheibe 104 durchtreten oder hinter der Abdeckscheibe 104 angeordnet sein.

Mit Hilfe des Helligkeitssensors 1020 kann über eine Automatik-Funktionalität die Lichtstärke des Arbeitslichtes wie auch eines reduzierten Nachtlichtes gesteuert werden.

Die erforderliche Auswerte-Hardware ist auch bei dieser Ausführungsform vorzugsweise ebenfalls auf der LED-Platine 100 integriert, beispielsweise als eine elektronische Komponente 106. Die empfangenen Signale können über Leiterbahnen an die gemeinsam genutzte Anschlusseinheit 105 oder an eine für die Sensoreinheit separat vorgesehene Anschlusseinheit (nicht gezeigt) geführt und dort mittels eines Kabelbaums (nicht gezeigt) zu einer Steuerung (nicht gezeigt) des Hauhaltsgerätes 1 weitergeleitet werden.

Im Falle eines Kühlschrankes als Haushaltsgerät 1 kann der Helligkeitssensor 1020 nach Figur 4 den Tür-Kontaktschalter zum Einschalten der Innenbeleuchtung, die vorzugsweise ebenfalls durch das erfindungsgemäße Beleuchtungsmodul 10 bereit gestellt wird, ersetzen.

Beim Einsatz einer Abdeckscheibe 104 mit Oberflächenbearbeitung, beispielsweise Milchglas, beschichtetes Glas, kann die Oberflächenbearbeitung im Bereich des Helligkeitssensors 1020 ausgespart beziehungsweise an die Anforderungen Helligkeitssensors 1020 angepasst werden.

Gemäß einer weiteren Ausführungsform (nicht gezeigt) wird eine Sensoreinheit mit einem Bewegungssensor als Sensor in das Beleuchtungsmodul 10 integriert. Der Aufbau des Beleuchtungsmoduls 10 kann insbesondere dem in Figur 4 gezeigten Aufbau entsprechen, wobei der Helligkeitssensor durch einen Bewegungssensor ersetzt ist.

Die Integration eines Bewegungssensors, der auch als Bewegungsmelder bezeichnet werden kann, kann bei Küchengeräten bei einigen Fällen hilfreich sein. So kann beispielsweise die Steuerung der Beleuchtung einer Dunstabzugshaube erfolgen. Die Anwendung bezieht sich auf den Arbeitsbereich unterhalb der Dunstabzugshaube. Bei einem Kühlschrank kann beispielsweise das Einschalten der Innenbeleuchtung bei einem Küchenschrank erfolgen. Der in die Beleuchtungsplatine integrierte Bewegungsmelder kann daher den Tür-Kontaktschalter ersetzen.

Der Bewegungssensor kann durch einen Durchbruch in der Abdeckscheibe 104 hindurchragen. Alternativ kann beim Einsatz einer Abdeckscheibe 104 mit Oberflächenbearbeitung beispielsweise Milchglas oder Beschichtungen, vorzugsweise die Oberflächenbearbeitung im Bereich des Sensors ausgespart beziehungsweise an die Anforderungen des Bewegungssensors angepasst werden, beispielsweise durch Freilassen eines Klarglasbereiches im Bereich des Bewegungssensors.

Gemäß einer weiteren Ausführungsform ist als Sensoreinheit eine Kamera 1026 in das Beleuchtungsmodul 10 integriert. Die Funktionalität kann dazu dienen den Innenraum vom Küchengerät zu überwachen und ist vorzugsweise beim Einsatz von vernetzten Küchengeräten sinnvoll.

Beispielsweise kann eine kurzfristige Überwachung des Innenraums eines Kühlschrankes zwecks Überprüfung des Lebensmittelbestandes erfolgen. Auch ist beispielsweise die Beobachtung des Gargutes in einem Backofen möglich.

Die Optik der Kamera, insbesondere die Linse, kann durch einen Durchbruch in der Abdeckscheibe 104 durchtauchen. Alternativ kann beim Einsatz einer Abdeckscheibe 104 mit Oberflächenbearbeitung beispielsweise Milchglas oder Beschichtungen, vorzugsweise die Oberflächenbearbeitung im Bereich der Optik der Kamera ausgespart beziehungsweise an die Anforderungen angepasst werden, beispielsweise durch Freilassen eines Klarglasbereiches im Bereich der Optik der Kamera.

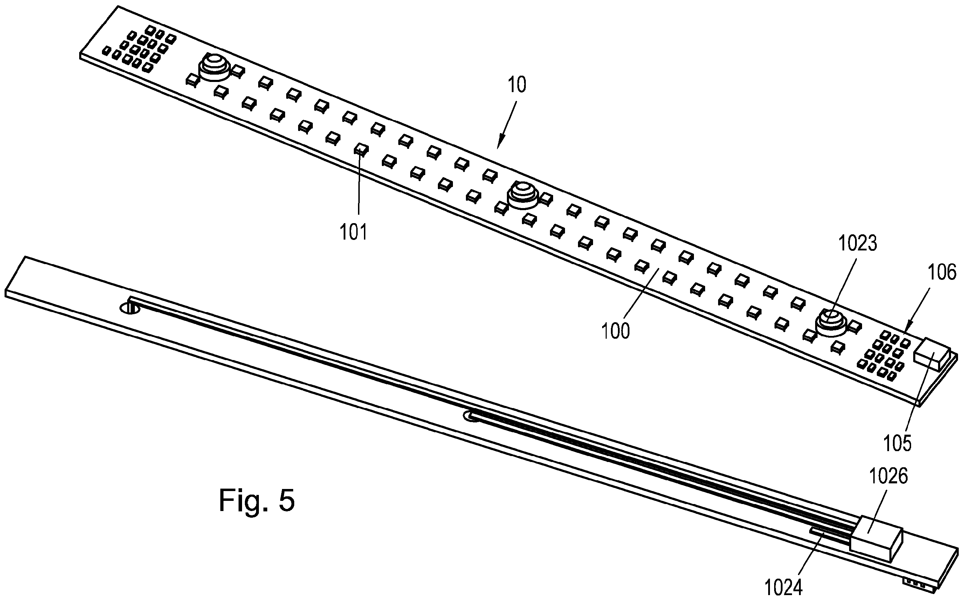

In Figur 5 ist eine Ausführungsform eines Beleuchtungsmoduls 10 mit einer Sensoreinheit 102, die eine Kamera 1026 umfasst, gezeigt. Der weitere Aufbau der Platine 100 und der darauf angeordneten Komponenten, insbesondere der Lichtquellen 101, der Anschlusseinheit 105 und der elektronischen Komponenten 106, entspricht dem bezüglich Figur 2 beschriebenen Aufbau und wird daher nicht erneut erläutert. Bei der Ausführungsform nach Figur 5 ist die Optik der Kamera 1026 mehrteilig, das heißt weist mehrere Linsen 1023 auf. Die Linsen 1023 dienen als optische Empfänger. Die Linsen 1023 sind auf der Vorderseite der Platine 100 über die Länge der Platine 100 verteilt zwischen den Lichtquellen 101 vorgesehen. In Figur 5 sind drei Linsen 1023 gezeigt. Die Linsen 1023 können über Lichtleiter 1024, die beispielsweise in Figur 5 auf der Rückseite der Platine 100 vorgesehen sind, auf eine Kamera 1026 gebündelt werden. In der in Figur 5 gezeigten Ausführungsform ist die Kamera 1026 ebenfalls auf der Rückseite der Platine 100 angeordnet.

Die Optik der Kamera 1026, insbesondere die Linse 1023 oder die Linsen 1023, kann durch einen Durchbruch in der Abdeckscheibe 104 hindurchragen. Alternativ kann beim Einsatz einer Abdeckscheibe 104 mit Oberflächenbearbeitung beispielsweise Milchglas oder Beschichtungen, vorzugsweise die Oberflächenbearbeitung im Bereich der Optik der Kamera 1026 ausgespart beziehungsweise an die Anforderungen der Kamera 1026 angepasst werden, beispielsweise durch Freilassen eines Klarglasbereiches im Bereich der Kamera 1026.

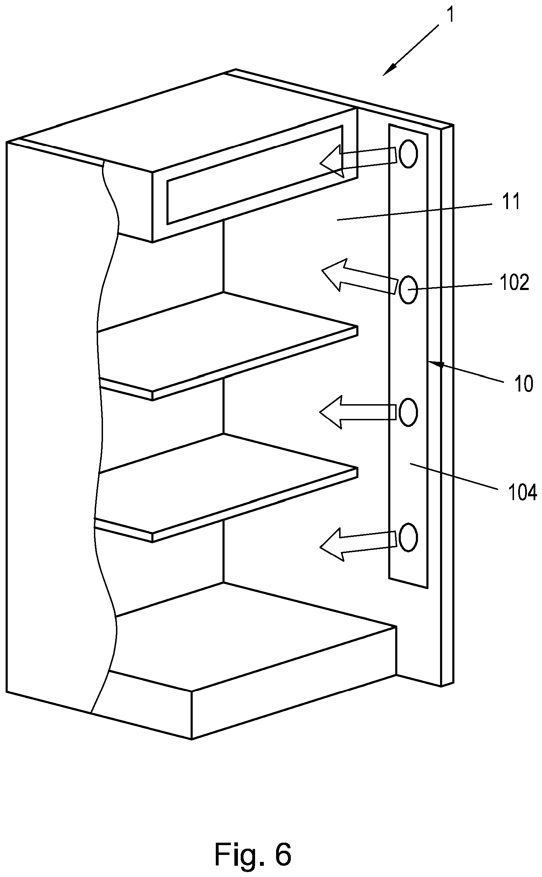

In Figur 6 ist eine weitere Ausführungsform eines Haushaltsgerätes 1 mit einem erfindungsgemäßen Beleuchtungsmodul 10 gezeigt. Das Haushaltsgerät stellt hierbei einen Kühlschrank dar. Bei dieser Ausführungsform ist in das Gehäuse 11 des Hauhaltsgerätes 1, das durch die Seitenwand des Innenraums des Kühlschranks gebildet wird, ein Beleuchtungsmodul 10 eingebracht. Die Öffnung hinter der das Beleuchtungsmodul 10 liegt, wird durch eine Abdeckscheibe 104 abgedeckt. Das Beleuchtungsmodul 102 erstreckt sich in der vertikalen Richtung. In der in Figur 6 gezeigten Ausführungsform sind vier Sensoreinheiten 102 über die Höhe des Beleuchtungsmoduls 10 verteilt vorgesehen. Jede Sensoreinheit 102 ist mit einer Ebene des Kühlschrankes 1 ausgerichtet. Die Sensoreinheiten 102 umfassen hierbei vorzugsweise jeweils eine Kamera (nicht sichtbar). Hierdurch kann eine getrennte Überwachung verschiedener Ablagezonen in dem Haushaltsgerät 1 erfolgen. Die Kameras 1026 oder zumindest deren Optik sind dabei so auf der Platine 100 positioniert und ausgerichtet, dass diese durch die Öffnung in dem Gehäuse 11 hindurch in die entsprechende Ablagezone gerichtet sind.

Die Erfindung ist nicht auf die dargestellten Ausführungsformen begrenzt. Beispielsweise ist es auch möglich mehrere Sensoreinheiten unterschiedlicher Art in einem Beleuchtungsmodul zu kombinieren. So kann beispielsweise eine Kombination von Empfänger (IR oder Funk) mit einem Gassensor bei einer Dunstabzugshaube eingesetzt werden. Die Sensoren der Sensoreinheiten erfüllen dabei unterschiedliche Funktionalitäten und agieren unabhängig voneinander. Auch ist es möglich eine Kombination von unterschiedlichen Sensoren (IR, Gas) zur Überwachung der Brandgefahr auf dem Kochfeld unterhalb der Dunstabzugshaube zu verwenden. Die Sensoren der Sensoreinheiten agieren hierbei gemeinsam nach einem vorgegebenen Algorithmus. Weiterhin kann beispielsweise eine Anordnung mehrerer Kameras im Bereich des Lampenraums eines Kühlschrankes zur getrennten Überwachung verschiedener Ablagezonen verwendet werden. Die Kameras erfüllen die gleiche Funktionalität, werden aber getrennt angesteuert. Auch andere Kombinationen von Sensoreinheiten in einem Beleuchtungsmodul sind erfindungsgemäß möglich.

Die vorliegende Erfindung kann vorteilhaft in lüftungstechnischen Haushaltsgeräten für den Küchenbereich, vorzugsweise in Dunstabzugshauben, eingesetzt werden. Hierbei können als Beleuchtungsmodule, in die mindestens eine Sensoreinheit integriert wird, leiterplattengestützten high- oder middle-power LEDs verwendet werden. Das Beleuchtungsmodul kann aus einer LED-Platine bestehen oder ein LED-Modul darstellen, bei dem beispielsweise zusätzlich zu der Platine Kühlrippen an der Rückseite der Platine vorgesehen sind.

Obwohl die Erfindung anhand spezifischer Beispiele ausgewählter Gerätetypen und Bauformen, beispielsweise von Dunstabzugshauben oder Kühlschränken beschrieben wurde, ist die Erfindung aber nicht auf diese Bauformen und Gerätetypen beschränkt, sondern kann bei anderen Gerätetypen, beispielsweise Backöfen und dergleichen, angewendet werden.

Gemäß der vorliegenden Erfindung, wird die vorhandene Platinenfläche eines Beleuchtungsmoduls mit elektronischen Komponenten bestückt, um Zusatzfunktionalitäten, die über die reine Beleuchtung hinausgehen, des Haushaltsgerätes zu ermöglichen. Dabei handelt es sich vorzugsweise um Funktionalitäten, die mit der Steuerung des Gerätes zusammenhängen und für ihre Funktion in der Regel eine Öffnung in dem vorzugsweise metallischen Gehäuse des Gerätes benötigen.

Gemäß der vorliegenden Erfindung wird als Öffnung, über die die Sensoreinheit(en) die Zustände erfassen können, die Öffnung in dem Gehäuse des Haushaltsgerätes verwendet, die durch eine Abdeckscheibe, die auch als Lampenglas bezeichnet wird, abgedeckt ist und hinter der das Beleuchtungsmodul vorgesehen ist. Es handelt sich hierbei in der Regel um eine Öffnung im metallischen Gehäuse welche eine ausreichend große Fläche, wodurch die mit der Erfindung möglichen Zusatzfunktionalitäten zuverlässig umgesetzt werden können. Da als Abdeckscheibe in der Regel Sicherheitsglas verwendet wird, kann im Vergleich zu Kunststoffabdeckungen das Auftreten von Problemen bei der Geräteprüfung und Approbation verhindert werden.

Ein weiterer Vorteil der Erfindung besteht darin, dass die Beleuchtung und insbesondere das Beleuchtungsmodul bei vielen Haushaltsgeräten in unmittelbarer Nähe zum Bedienteil des Haushaltsgerätes liegt, was zu einer Vereinfachung der Geräteverdrahtung führt.

Weiterhin ist es mit der vorliegenden Erfindung insbesondere möglich diverse Funktionalitäten zu integrieren ohne die bekannten Nachteile des Standes der Technik, beispielsweise das Vorsehen von zusätzlichen Öffnungen in dem Gehäusematerial und den damit einhergehenden designtechnischen Nachteilen in Haushaltsgeräten in Kauf nehmen zu müssen. Zudem können auf einfache Weise mehrere unterschiedliche Sensoren kombiniert werden. Schließlich besteht die Möglichkeit neue Funktionalitäten zum Einsatz in Haushaltsgeräten zu schaffen.

### Bezugszeichenliste

- 1: Haushaltsgerät
- 11: Gehäuse
- 10: Beleuchtungsmodul
- 100: Platine
- 101: Lichtquelle
- 102: Sensoreinheit
- 1020: Sensor
- 1021: Empfangseinheit
- 1022: Antenne
- 1023: Linse
- 1024: Lichtleiter
- 1025: Halterung
- 1026: Kamera
- 103: Reflektor
- 104: Abdeckscheibe
- 105: Anschlusseinheit
- 106: elektronische Komponenten

## Patentansprüche

1. Beleuchtungsmodul für ein Haushaltsgerät (1), wobei das Beleuchtungsmodul (10) mindestens eine Lichtquelle (101), mindestens eine Sensoreinheit (102) und mindestens eine Anschlusseinheit (105) aufweist, **dadurch gekennzeichnet, dass** die mindestens eine Anschlusseinheit (105) eine gemeinsame Anschlusseinheit darstellt, die mit der mindestens einen Lichtquelle (101) und der mindestens einen Sensoreinheit (102) verbunden ist und zur Verbindung des Beleuchtungsmoduls (10) mit zumindest einer Steuereinheit des Haushaltsgerätes (1) dient, dass das Beleuchtungsmodul (10) einen Träger (100) für die mindestens eine Lichtquelle (101) aufweist, dass der Träger (100) eine Platine darstellt und dass die mindestens eine Sensoreinheit (102) auf dem Träger (100) auf der Seite des Trägers (100), an der die mindestens eine Lichtquelle (101) vorgesehen ist, vorgesehen ist.

2. Beleuchtungsmodul nach Anspruch 1, **dadurch gekennzeichnet, dass** mindestens eine der mindestens einen Lichtquelle (101) eine Leuchtdiode (LED) ist.

3. Beleuchtungsmodul nach einem der Ansprüche 1 oder 2, **dadurch gekennzeichnet, dass** an dem Beleuchtungsmodul (10) eine Auswerteeinheit zum Auswerten der Signale mindestens einer der mindestens einen Sensoreinheit (102) vorgesehen ist.

4. Beleuchtungsmodul nach einem der Ansprüche 1 bis 3, **dadurch gekennzeichnet, dass** der Träger (100) eine Platine (100) darstellt und zumindest die mindestens eine Sensoreinheit (100), die mindestens eine Lichtquelle (101) und mindestens eine Steckerbuchse, ein Verbindungskabel oder ein Platinenrandstecker als Anschlusseinheit (105) an der Platine (100) vorgesehen ist.

5. Beleuchtungsmodul nach einem der Ansprüche 1 bis 4, **dadurch gekennzeichnet, dass** die Sensoreinheit (102) einen Sensor (1020) zum Erfassen zumindest eines Zustandes der Umgebung des Haushaltsgerätes aufweist, insbesondere einen Luftgütesensor, einen Gassensor, einen Helligkeitssensor oder einen Bewegungssensor.

6. Beleuchtungsmodul nach einem der Ansprüche 1 bis 5, **dadurch gekennzeichnet, dass** die Sensoreinheit (102) eine Empfangseinheit (1021) für den Empfang von Wellensignalen, insbesondere eines Funksignals, eines Infrarotsignals oder eines Lichtsignals, aufweist.

7. Beleuchtungsmodul nach einem der Ansprüche 1 bis 6, **dadurch gekennzeichnet, dass** in dem Beleuchtungsmodul (10) mindestens zwei Sensoreinheiten (102) unterschiedlicher Art enthalten sind.

8. Haushaltsgerät mit mindestens einem Beleuchtungsmodul (10) nach einem der Ansprüche 1 bis 7, **dadurch gekennzeichnet, dass** das Beleuchtungsmodul (10) so angeordnet ist, dass zumindest die mindestens eine Sensoreinheit (102) mit einem zumindest lichtdurchlässigen Bereich (104) des Gehäuses (11) des Haushaltsgerätes (1) ausgerichtet ist.

9. Haushaltsgerät nach Anspruch 8, **dadurch gekennzeichnet, dass** die mindestens eine Sensoreinheit (102) hinter einer Öffnung in dem lichtdurchlässigen Bereich (104) des Gehäuses (11) des Haushaltsgerätes (1) angeordnet ist.

10. Haushaltsgerät nach einem der Ansprüche 8 oder 9, **dadurch gekennzeichnet, dass** das Haushaltsgerät (1) eine Dunstabzugshaube ist.

11. Haushaltsgerät nach Anspruch 10, **dadurch gekennzeichnet, dass** das Beleuchtungsmodul (10) ein Beleuchtungsmodul (10) zum Beleuchtung zumindest eines Teils einer Kochstelle unterhalb der Dunstabzugshaube ist.

## Claims

1. Lighting module for a household appliance (1), wherein the lighting module (10) has at least one light source (101), at least one sensor unit (102) and at least one connection unit (105), **characterised in that** the at least one connection unit (105) constitutes a shared connection unit, which is connected to the at least one light source (101) and the at least one sensor unit (102) and serves to connect the lighting module (10) to at least one control unit of the household appliance (1), that the lighting module (10) has a support (100) for the at least one light source (101), that the support (100) features a circuit board and that the at least one sensor unit (102) is provided on the support (100) on the side of the support (100) on which the at least one light source (101) is provided.

2. Lighting module according to claim 1, **characterised in that** at least one of the at least one light source (101) is a light-emitting diode (LED).

3. Lighting module according to claim 1 or 2, **characterised in that** an evaluating unit is provided on the lighting module (10) for evaluating the signals at least of the at least one sensor unit (102).

4. Lighting module according to one of claims 1 to 3, **characterised in that** the support (100) features a circuit board (100) and at least the at least one sensor unit (100), the at least one light source (101) and at least one socket, a connecting cable or a circuit board edge connector as a connection unit (105) is provided on the circuit board (100).

5. Lighting module according to one of claims 1 to 4, **characterised in that** the sensor unit (102) has a sensor (102) for detecting at least a status of the environment of the household appliance, in particular an air quality sensor, a gas sensor, a brightness sensor or a movement sensor.

6. Lighting module according to one of claims 1 to 5, **characterised in that** the sensor unit (102) has a receiving unit (1021) for receiving wave signals, in particular a radio signal, an infrared signal or a light signal.

7. Lighting module according to one of claims 1 to 6, **characterised in that** at least two sensor units (102) of different types are contained in the lighting module (10).

8. Household appliance with at least one lighting module (10) according to one of claims 1 to 7, **characterised in that** the lighting module (10) is arranged such that at least the at least one sensor unit (102) is aligned with an at least translucent region (104) of the housing (11) of the household appliance (1).

9. Household appliance according to claim 8, **characterised in that** the at least one sensor unit (102) is arranged behind an opening in the translucent region (104) of the housing (11) of the household appliance (1).

10. Household appliance according to claim 8 or 9, **characterised in that** the household appliance (1) is an extractor hood.

11. Household appliance according to claim 10, **characterised in that** the lighting module (10) is a lighting module (10) for illuminating at least a part of a cooking zone beneath the extractor hood.

## Revendications

1. Module d'éclairage pour un appareil ménager (1), dans lequel le module d'éclairage (10) comprend au moins une source de lumière (101), au moins un organe de capteur (102) et au moins un bloc de connexion (105),
**caractérisé en ce que** l'au moins un bloc de connexion (105) est un bloc de connexion commun, qui est connecté à l'au moins une source de lumière (101) et à l'au moins un organe de capteur (102) et sert à connecter le module d'éclairage (10) à au moins une unité de commande de l'appareil ménager (1),
**en ce que** le module d'éclairage (10) comprend un support (100) pour l'au moins une source de lumière (101),
**en ce que** le support (100) est une platine et
**en ce que** l'au moins un organe de capteur (102) est agencé sur le support (100) du côté du support (100) sur lequel l'au moins une source de lumière (101) est agencée.

2. Module d'éclairage selon la revendication 1, **caractérisé en ce qu'**au moins une des au moins une source de lumière (101) est une diode électroluminescente (DEL).

3. Module d'éclairage selon la revendication 1 ou 2, **caractérisé en ce qu'**une unité d'évaluation servant à évaluer les signaux d'au moins un de l'au moins un organe de capteur (102) est agencée sur le module d'éclairage (10).

4. Module d'éclairage selon l'une des revendications 1 à 3, **caractérisé en ce que** le support (100) est une platine (100) et au moins l'au moins un organe de capteur (100), l'au moins une source de lumière (101) et au moins une fiche femelle, un câble de connexion ou un connecteur latéral de platine à titre de bloc de connexion (105) sont agencés sur la platine (100).

5. Module d'éclairage selon l'une des revendications 1 à 4, **caractérisé en ce que** l'organe de capteur (102) comprend un capteur (1020) pour détecter au moins un état de l'environnement de l'appareil ménager, en particulier un capteur de qualité de l'air, un capteur de gaz, un capteur de luminosité ou un capteur de mouvement.

6. Module d'éclairage selon l'une des revendications 1 à 5, **caractérisé en ce que** l'organe de capteur (102) comprend une unité de réception (1021) destinée à recevoir des signaux d'onde, en particulier un signal radio, un signal infrarouge ou un signal lumineux.

7. Module d'éclairage selon l'une des revendications 1 à 6, **caractérisé en ce qu'**au moins deux organes de capteur (102) de différent type sont inclus dans le module d'éclairage (10).

8. Appareil ménager comprenant au moins un module d'éclairage (10) selon l'une des revendications 1 à 7, **caractérisé en ce que** le module d'éclairage (10) est disposé de manière à ce qu'au moins l'au moins un organe de capteur (102) soit aligné avec une partie au moins translucide (104) du boîtier (11) de l'appareil ménager (1).

9. Appareil ménager selon la revendication 8, **caractérisé en ce que** l'au moins un organe de capteur (102) est disposé derrière un orifice dans la partie translucide (104) du boîtier (11) de l'appareil ménager (1).

10. Appareil ménager selon l'une des revendications 8 ou 9, **caractérisé en ce que** l'appareil ménager (1) est une hotte aspirante.

11. Appareil ménager selon la revendication 10, **caractérisé en ce que** le module d'éclairage (10) est un module d'éclairage (10) destiné à éclairer au moins une partie d'une plaque de cuisson en dessous de la hotte aspirante.
